# EUROPEAN PATENT SPECIFICATION

(11) **EP 1 175 043 B1**
(45) Date of publication and mention of the grant of the patent: **30.11.2005**
(21) Application number: 00115588.6
(22) Date of filing: 19.07.2000
(51) Int. Cl.: H04L 12/28, H04L 29/06

(54) **Method of getting access to a home network from remote**
Verfahren zum Fernzugriff auf ein Heimnetz
Procédè pour l'acces à distance d'un réseau de domotique

(43) Date of publication of application: 23.01.2002
(73) Proprietor: Sony Deutschland GmbH, 50829 Köln (DE)
(72) Inventor: Hilt, Patrick, c/o Sony International (Europe GmbH, 70327 Stuttgart (DE)
(74) Representative: Müller - Hoffmann & Partner

(56) References cited:
- WO-A-97/09800
- US-A- 5 896 382
- US-A- 5 949 779

## Description

The present invention pertains to a method of getting access to a home network via an existing communication network, the home network and the communication network being connected by a gateway, and an apparatus therefore.

A commonly used method for interconnecting and controlling home devices is to use home networking. Using such a home network, it is possible that any home device controls and communicates with any other home device. Further, it is possible to control these devices from remote.

To do this, it may be desirable to use the Internet as a communication network connecting the remote user to the home network. Such a connection can be realized by a gateway as an interface between the home network and the Internet, for example.

However, in such a case, it is necessary to have the gateway permanently connected to the Internet, which is expensive and represents a security hazard.

Further information pertaining to the prior art can be found in WO 97/09800 which discloses a home controller for controlling access to a home network which includes a plurality of modules. The home controller is used to draw together external communications networks, such as LANs and WANs, internal communications networks, such as a home network of modules, and applications which can reside on or across any of the above networks. The home controller provides for connectivity of the modules with the respective networks, and supports a wide variety of communications parameters and network technologies. The home controller is provided with an association table for storing information related to connections with any of the networks, and it uses that information for determining an appropriate connection for a module requesting a connection.

It is an object of the present invention to provide a method of getting access to a home network, which is low in cost, and which shows a high standard of security.

To solve this object, the present invention provides a method in accordance with independent claim 1.

Further, in accordance with independent claim 14, the present invention provides a gateway for connecting a user to a home network via a first communication network available for the user, the gateway comprising a first connecting means connecting the gateway to the first communication network, and a second connecting means connecting the gateway to the home network, characterized by further comprising a third connecting means, connecting the gateway to a second communication network available for the user, processing means for processing data received by the third connecting means via the second communication network, and connection control means for establishing a connection between the home network and the first communication network via the first and the second connecting means.

Further preferred embodiments of this method and gateway according to the present invention defined in independent claims 1 and 14, respectively, are described in the respective subclaims.

An important aspect of the present invention is that the gateway is capable of establishing the connection between the home network and the first communication network itself. After the connection has been established by the gateway, the user can use this connection in order to control home devices within the home network over the first communication network.

The advantage thereof is that it is not necessary to have a permanent connection between the home network and the first communication network via the gateway, as this connection can be established on demand. In order to cause the gateway establishing the connection between the first communication network and the home network, the user preferably uses a second communication network connected to the gateway, which may be a telephone network, for example, and a communication device connected to the second communication network. Using a second communication network has the advantage that a connection can be established even if the gateway can not be contacted in its disconnected state over the first communication network. For example, if the first communication network is constituted by a telephone network, connecting the gateway to an Internet service provider (ISP), and by the internet, connecting the ISP to the user, and if the gateway is not connected to the ISP, it is not possible for the user to contact the gateway via the first communication network. However, using the present invention, the user can cause the gateway via the second communication network dialing up to the ISP e.g. by using a gateway-built-in modem, thereby establishing a connection between the home network and the Internet.

Another advantage of the present invention is that it is possible to establish a connection between the user and the home network even if the user can not access a device like a modem or an ISDN-card for connecting to the gateway directly by using such devices, as it is possible to transfer data including commands from the communication device via the second communication network to the gateway, thereby causing the gateway to establish the connection itself. The established connection can then by used without a modem or an ISDN-card, a network card could be sufficient therefore.

The user may, for example, connect himself to the gateway via a telephone network by using a telephone as a communication device. After authentication using the key-pad of the telephone or the voice, the user can give commands to the gateway by using his voice or a key-pad, for example. This way, he can control the gateway. As it is possible to use a mobile telephone, the present invention makes it possible to control the gateway from almost every point.

Since only the gateway needs to be controlled in this way only a very restricted set of commands is necessary in comparison to controlling the entire home network.

The procedure of authenticating is an additional step which decreases the security risk. The gateway analyzes an authenticating information and the commands sent to the gateway by the second communication network by means like a touch tone analysis or a voice recognition means, which are included in the gateway.

Alternatively, authenticating and controlling the gateway can be done by using the first communication network after the connection has been established by the gateway. In this case no commands are necessary to cause the gateway to connect to the first communication network, since this could be done automatically by the gateway after receiving an incoming call and/or the telephone number of the remote user.

In the case that the user needs information to use the established connection between the home network and the first communication network, the gateway sends this information to receiving means which is connected to the first communication network and/or to the second communication network, and which is available for the user. This makes it possible, for example, to tell the user dynamic IP addresses assigned by the ISP to the gateway, if the gateway has been dialing up to the ISP in order to use the Internet as a part of a first communication network. Thus, the user can supply the dynamic IP numbers to his communication software, thereby connecting himself over the Internet and the gateway to the home network, without dialing up to an ISP. For example, the gateway sends an e-mail over the first communication network to an e-mail box available for the user after the connection has been established or a SMS over the second communication network to a SMS enabled phone. Another possibility is to send a facsimile.

In order to prevent an unnecessary connection in the case that the connection is not used, the gateway disconnects itself automatically from the first communication network by breaking down the established connection after a predetermined period of time, if the established connection is not used within this period of time. Thus, unnecessary costs can be avoided.

Further advantages and embodiments of the present invention will be explained below in conjunction with the following drawing.

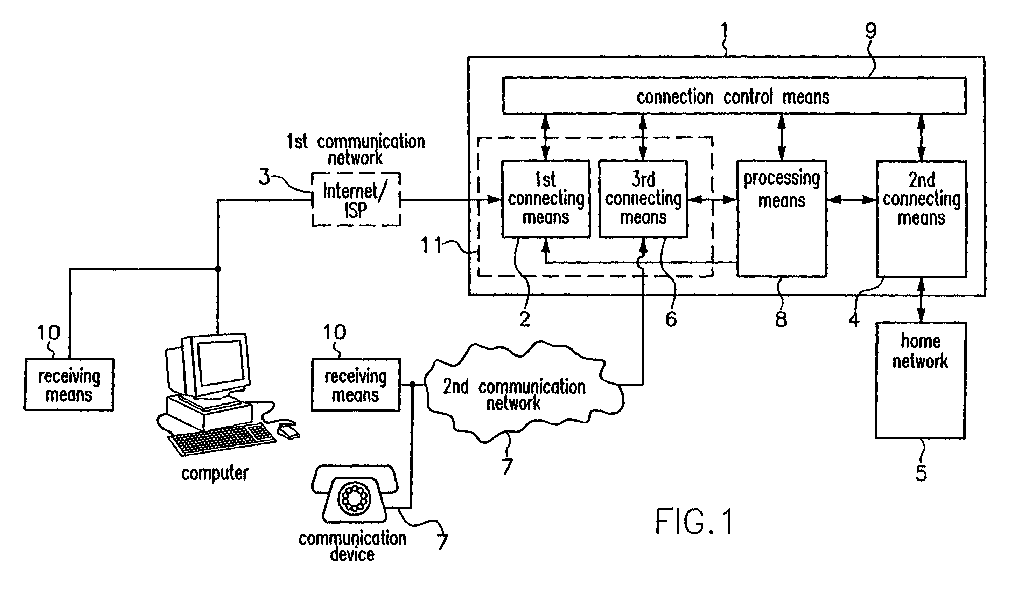

- **Fig. 1**: is an explanatory drawing showing a preferred embodiment of a gateway in accordance with the present invention.

In the following description, a preferred embodiment of a gateway for realizing the method described above will be given.

A gateway 1 comprises a first connecting means 2 to connect the gateway to the first communication network 3, and a second connecting means 4 connecting the gateway 1 to the home network 5.

According to the present invention, the gateway further comprises a third connecting means 6, connecting the gateway 1 to a second communication network 7 which is available for the user, a processing means 8 for processing data received by the third connecting means 6 via the second communication network 7, and a connection control means 9 for establishing a connection between the home network 5 and the first communication network 3 via the first and the second connecting means 2, 4.

The processing means 8 analyzes the data received by the third connecting means 6, which is preferably linked to a telephone network 7 or by the first connecting means 2. To carry out the data analyzation, the processing means 8 preferably includes a touch tone analysis means (not shown) or a voice recognition means (not shown). The processing means 8 extracts commands or authenticating information from the received data and sends them to the connection control means 9. The connection control means 9 organizes the communication between the home network 5 and the first communication network 3 according to the received commands. For example, the connection control means 9 causes the first connecting means 2 to dial-up to an ISP. Another possibility is to send information needed to use the established connection over the first communication network 3 to a receiving means 10, which is connected to the first and/or the second communication network 3, 7.

The receiving means 10 is preferably an e-mail box, an SMS-enabled device, or a facsimile.

The first communication network 3 preferabbly is (or at least a part of it) the Internet, wherein the second communication network 7 preferably comprises a telephone network, for example the public telephone network, i. e. a combination of a mobile telephone network and a cable telephone network. In a preferred embodiment, the first communication network 3 comprises an ISP.

In another embodiment, the first and/or the third connecting means 2, 6 comprise a modem or an ISDN box.

The first and the third connecting means may be condensed together into one single connecting means 11 connected to only one of the communication networks 3, 7 or to both of them. The single connection means 11 preferably includes a modem or an ISDN box.

In another embodiment, the first connecting means 3 and the third connecting means 6 are linked together such in that the communication via the first and the second communication network 3, 7 can be done exclusively with one of the first connecting means 2 and the third connecting means 6.

## Claims

1. Method of getting access to a home network (5) via a first communication network (3), the home network (5) and the first communication network (3) being connectable by a gateway (1), **characterized by** the following steps:
- contacting, via a second communication network (7), the gateway (1) by using a communication device, and
- establishing a connection between the home network (5) and the first communication network (3) via the gateway (1).

2. Method according to claim 1, **characterized in that** the step of contacting the gateway (1) includes the step of transferring data from the communication device to the gateway (1).

3. Method according to claim 2, **characterized in that** the step of establishing the connection between the home network (5) and the first communication network (3) is done by the gateway (1) if the transferred data includes a corresponding command.

4. Method according to one of the preceeding claims, **characterized in that** the second communication network (7) is a telephone network.

5. Method according to one of the claims 2 to 4, **characterized by** a step of authenticating after or during the step of establishing a connection, wherein authenticating data is transferred via the first communication network (3) to the gateway (1), the gateway (1) blocking further action if the authenticating data does not match to authorization data of the gateway (1).

6. Method according to one of the claims 3 to 4, **characterized in that** the step of contacting the gateway (1) includes a step of authenticating by transferring authenticating data from the communication device via the second communication network (7) to the gateway (1), the gateway (1) blocking further action if the authenticating data does not match to authorization data of the gateway (1).

7. Method according to one of the preceding claims, **characterized in that** necessary information needed to use the established connection between the home network (5) and the first communication network (3) is sent by the gateway (1) over the first communication network (3) or the second communication network (7) to receiving means (10), which is connected to the first communication network (3) and/or to the second communication network (7) and which is available for the user.

8. Method according to one of the preceding claims, **characterized in that** at least one of the steps of authenticating and of transmitting data to the gateway (1) is done by using a telephone as communication device.

9. Method according to claim 8, **characterized in that** at least one of the steps of authenticating and transmitting data is done by using the key-pad of the telephone or by using the voice, and that the procedures of authenticating and transmitting data are controlled by an touch tone analysis means (8) or by a voice recognition means (8) included in the gateway (1).

10. Method according to one of the preceding claims, **characterized in that** the gateway (1) dials-up to an Internet service provider for connecting the home network (5) via the gateway (1) to the Internet as the first communication network (3), if a corresponding command is included in the data transferred from the communication device to the gateway (1).

11. Method according to one of claims 7 to 10, **characterized in that** the necessary information is sent in form of an e-mail, a SMS or a fax to the receiving means (10), which is a e-mailbox, a SMS-enabled device or a fax.

12. Method according to one of the preceding claims, **characterized in that** the communication device is both used as communication device and as receiving means (10).

13. Method according to one of the preceding claims, **characterized in that** the gateway (1) disconnects itself automatically from the first communication network (3) by breaking down the established connection after a predetermined period of time if the established connection is not used within this period of time.

14. Gateway (1) for connecting a user to a home network via a first communication network (3) available for the user, the gateway (1) comprising a first connecting means (2) connecting the gateway (1) to the first communication network (3), and a second connecting means (4) connecting the gateway (1) to the home network (5), **characterized by** further comprising
- a third connecting means (6), connecting the gateway (1) to a second communication network (7) available for the user,
- processing means (8) for processing data received by the third connecting means (6) via the second communication network (7), and
- connection control means (9) for establishing a connection between the home network (5) and the first communication network (3) via the first and the second connecting means (2, 4).

15. Gateway (1) according to claim 14, **characterized in that** the processing means (8) comprises a touch tone analysis means or a voice recognition means.

16. Gateway (1) according to claim 14 or 15, **characterized in that** the first and the third connecting means (2, 6) are condensed together into one single connecting means (11), which is preferably a modem or an ISDN-box, connecting the gateway (1) to the first and the second communication network (3, 7).

17. Gateway (1) according to one of the claims 14 to 16, **characterized in that** the Internet is at least part of the first communication network (3).

18. Gateway (1) according to one of the claims 14 to 17, **characterized in that** a telephone network is at least part of the second communication network (7).

19. Gateway (1) according to one of the claims 14 to 18, **characterized in that** the first connecting means (2) comprises a modem or an ISDN-box.

20. Gateway (1) according to one of the claims 14 to 19, **characterized in that** the third connecting means (6) comprises a modem or an ISDN-box.

21. Communication network comprising:
a gateway according to one of the claims 14 to 20 ;
said first communication network; and
said second communication network,
**characterized by** a receiving means (10), which is connected to the gateway (1) via the first or the second communication network (3, 7) and reachable for the user, for receiving information sent by the gateway (1) over the first or the second communication network (3, 7).

22. Communication network according to claim 21, **characterized in that** the receiving means (10) is an e-mailbox, a SMS-enabled device or a fax.

## Patentansprüche

1. Verfahren zum Erlangen von Zugriff auf ein Heimnetzwerk (5) über ein erstes Kommunikationsnetzwerk (3), wobei das Heimnetzwerk (5) und das erste Kommunikationsnetzwerk (3) über einen Gateway (1) miteinander verbindbar sind, **gekennzeichnet durch** die folgenden Schritte:
- mit dem Gateway (1) wird unter Verwendung eines Kommunikationsgeräts mit einem zweiten Kommunikationsnetzwerk (7) in Kontakt getreten; und
- es wird eine Verbindung zwischen dem Heimnetzwerk (5) und dem ersten Kommunikationsnetzwerk (3) über den Gateway (1) errichtet.

2. Verfahren nach Anspruch 1, **dadurch gekennzeichnet, dass** der Schritt, bei dem mit dem Gateway (1) in Kontakt getreten wird, den Schritt des Übertragens von Daten vom Kommunikationsgerät an den Gateway (1) beinhaltet.

3. Verfahren nach Anspruch 2, **dadurch gekennzeichnet, dass** der Schritt des Errichtens einer Verbindung zwischen dem Heimnetzwerk (5) und dem ersten Kommunikationsnetzwerk (3) durch den Gateway (1) ausgeführt wird, wenn die übertragenen Daten einen entsprechenden Befehl beinhalten.

4. Verfahren nach einem der vorstehenden Ansprüche, **dadurch gekennzeichnet, dass** das zweite Kommunikationsnetzwerk (7) ein Telefonnetz ist.

5. Verfahren nach einem der Ansprüche 2 bis 4, **gekennzeichnet durch** einen Schritt einer Berechtigungserkennung nach oder während dem Schritt des Errichtens einer Verbindung, wobei Kennungsdaten über das erste Kommunikationsnetzwerk (3) an den Gateway (1) übertragen werden und der Gateway (1) weitere Aktionen sperrt, wenn die Kennungsdaten nicht zu Kennungsdaten des Gateways (1) passen.

6. Verfahren nach einem der Ansprüche 3 bis 4, **dadurch gekennzeichnet, dass** der Schritt bei dem mit dem Gateway (1) in Kontakt getreten wird, einen Schritt der Berechtigungserkennung durch Übertragen von Kennungsdaten vom Kommunikationsgerät über das zweite Kommunikationsnetzwerk (7) an den Gateway (1) beinhaltet, wobei der Gateway (1) weitere Aktionen sperrt, wenn die Kennungsdaten nicht zu Kennungsdaten des Gateways (1) passen.

7. Verfahren nach einem der vorstehenden Ansprüche, **dadurch gekennzeichnet, dass** erforderliche Information, die dazu benötigt wird, die errichtete Verbindung zwischen dem Heimnetzwerk (5) und dem ersten Kommunikationsnetzwerk (3) zu nutzen, durch den Gateway (1) über das erste Kommunikationsnetzwerk (3) oder das zweite Kommunikationsnetzwerk (7) an eine Empfangseinrichtung (10) geliefert wird, die mit dem ersten Kommunikationsnetzwerk (3) und/oder dem zweiten Kommunikationsnetzwerk (7) verbunden ist und dem Benutzer zugänglich ist.

8. Verfahren nach einem der vorstehenden Ansprüche, **dadurch gekennzeichnet, dass** mindestens einer der Schritte der Berechtigungserkennung und des Übertragens von Daten an den Gateway (1) unter Verwendung eines Telefons als Kommunikationsgerät erfolgt.

9. Verfahren nach Anspruch 8, **dadurch gekennzeichnet, dass** mindestens einer der Schritte der Berechtigungserkennung und des Übertragens von Daten unter Verwendung der Tastatur des Telefons oder unter Verwendung von Sprache erfolgt, und dass die Prozeduren der Berechtigungserkennung und der Datenübertragung durch eine Berührungstonanalyse-Einrichtung (8) oder eine Spracherkennungseinrichtung (8), die im Gateway (1) enthalten ist, gesteuert werden.

10. Verfahren nach einem der vorstehenden Ansprüche, **dadurch gekennzeichnet, dass** sich der Gateway (1) bei einem Internetdienstprovider einwählt, um das Heimnetzwerk (5) über ihn mit dem Internet als erstem Kommunikationsnetzwerk (3) zu verbinden, wenn in den vom Kommunikationsgerät an ihn übertragenen Daten ein entsprechender Befehl enthalten ist.

11. Verfahren nach einem der Ansprüche 7 bis 10, **dadurch gekennzeichnet, dass** die erforderliche Information in Form einer E-Mail, einer SMS oder eines Fax an die Empfangseinrichtung (10) geliefert wird, die ein E-Mail-Postkorb, ein für SMS aktiviertes Gerät oder ein Fax ist.

12. Verfahren nach einem der vorstehenden Ansprüche, **dadurch gekennzeichnet, dass** das Kommunikationsgerät sowohl als Kommunikationsgerät als auch als Empfangseinrichtung (10) verwendet wird.

13. Verfahren nach einem der vorstehenden Ansprüche, **dadurch gekennzeichnet, dass** der Gateway (1) sich selbst automatisch vom ersten Kommunikationsnetzwerk (3) durch Unterbrechen der errichteten Verbindung nach einer vorbestimmten Zeitperiode trennt, wenn die errichtete Verbindung innerhalb dieser Zeitperiode nicht genutzt wird.

14. Gateway (1) zum Verbinden eines Benutzers mit einem Heimnetzwerk über ein erstes, dem Benutzer zugängliches Kommunikationsnetzwerk (3), wobei der Gateway (1) über eine erste Verbindungseinrichtung (2), die ihn mit dem ersten Kommunikationsnetzwerk (3) verbindet, und eine zweite Verbindungseinrichtung (4) verfügt, die ihn mit dem Heimnetzwerk (5) verbindet, **gekennzeichnet durch**
- eine dritte Verbindungseinrichtung (6), die ihn mit einem zweiten, dem Benutzer zugänglichen Kommunikationsnetzwerk (7) verbindet;
- eine Verarbeitungseinrichtung (8) zum Verarbeiten von Daten, die **durch** die dritte Verbindungseinrichtung (6) über das zweite Kommunikationsnetzwerk (7) empfangen werden; und
- eine Verbindungssteuerungseinrichtung (9) zum Errichten einer Verbindung zwischen dem Heimnetzwerk (5) und dem ersten Kommunikationsnetzwerk (3) über die erste und die zweite Verbindungseinrichtung (2, 4).

15. Gateway (1) nach Anspruch 14, **dadurch gekennzeichnet, dass** die Verarbeitungseinrichtung (8) über eine Berührungstonanalyse-Einrichtung oder eine Spracherkennungseinrichtung verfügt.

16. Gateway (1) nach Anspruch 14 oder 15, **dadurch gekennzeichnet, dass** die erste und die dritte Verbindungseinrichtung (2, 6) zu einer einzelnen Verbindungseinrichtung (11) integriert sind, die vorzugsweise ein Modem oder ein ISDN-Gerät ist und die den Gateway (1) mit dem ersten und dem zweiten Kommunikationsnetzwerk (3, 7) verbindet.

17. Gateway (1) nach einem der Ansprüche 14 bis 16, **dadurch gekennzeichnet, dass** das Internet zumindest einen Teil des ersten Kommunikationsnetzwerks (3) bildet.

18. Gateway (1) nach einem der Ansprüche 14 bis 17, **dadurch gekennzeichnet, dass** ein Telefonnetz zumindest einen Teil des zweiten Kommunikationsnetzwerks (7) bildet.

19. Gateway (1) nach einem der Ansprüche 14 bis 18, **dadurch gekennzeichnet, dass** die erste Verbindungseinrichtung (2) über ein Modem oder ein ISDN-Gerät verfügt.

20. Gateway (1) nach einem der Ansprüche 14 bis 19, **dadurch gekennzeichnet, dass** die dritte Verbindungseinrichtung (6) über ein Modem oder ein ISDN-Gerät verfügt.

21. Kommunikationsnetzwerk mit:
- einem Gateway nach einem der Ansprüche 14 bis 17;
- dem genannten ersten Kommunikationsnetzwerk und
- dem genannten zweiten Kommunikationsnetzwerk;
**gekennzeichnet durch** eine Empfangseinrichtung (10), die über das erste oder das zweite Kommunikationsnetzwerk (3, 7) mit dem Gateway (1) verbunden ist und **durch** den Benutzer erreichbar ist, um Information zu empfangen, die vom Gateway (1) über das erste oder das zweite Kommunikationsnetzwerk (3, 7) geliefert wird.

22. Kommunikationsnetzwerk nach Anspruch 21, **dadurch gekennzeichnet, dass** die Empfangseinrichtung (10) ein E-Mail-Postkorb, ein für SMS aktiviertes Gerät oder ein Fax ist.

## Revendications

1. Procédé d'accès à un réseau domestique (5) par l'intermédiaire d'un premier réseau de communication (3), le réseau domestique (5) et le premier réseau de communication (3) pouvant être connectés par une passerelle (1), **caractérisé en ce qu'**il comprend les étapes consistant à :
contacter, par l'intermédiaire d'un deuxième réseau de communication (7), la passerelle (1) en utilisant un dispositif de communication, et
établir une connexion entre le réseau domestique (5) et le premier réseau de communication (3) par l'intermédiaire de la passerelle (1).

2. Procédé selon la revendication 1, **caractérisé en ce que** l'étape consistant à contacter la passerelle (1) comprend l'étape consistant à transférer des données depuis le dispositif de communication vers la passerelle (1).

3. Procédé selon la revendication 2, **caractérisé en ce que** l'étape consistant à établir la connexion entre le réseau domestique (5) et le premier réseau de communication (3) est réalisée par la passerelle (1) si les données transférées comprennent une commande correspondante.

4. Procédé selon l'une quelconque des revendications précédentes, **caractérisé en ce que** le deuxième réseau de communication (7) est un réseau téléphonique.

5. Procédé selon l'une quelconque des revendications 2 à 4, **caractérisé par** une étape consistant à authentifier après, ou pendant l'étape consistant à établir une connexion, dans lequel des données d'authentification sont transférées par l'intermédiaire du premier réseau de communication (3) vers la passerelle (1), la passerelle (1) bloquant toute autre action si les données d'authentification ne correspondent pas aux données d'autorisation de la passerelle (1).

6. Procédé selon l'une quelconque des revendications 3 à 4, **caractérisé en ce que** l'étape consistant à contacter la passerelle (1) comprend une étape d'authentification en transférant des données d'authentification depuis le dispositif de communication par l'intermédiaire du deuxième réseau de communication (7) vers la passerelle (1), la passerelle (1) bloquant toute autre action si les données d'authentification ne correspondent pas aux données d'autorisation de la passerelle (1).

7. Procédé selon l'une quelconque des revendications précédentes, **caractérisé en ce que** les informations nécessaires pour utiliser la connexion établie entre le réseau domestique (5) et le premier réseau de communication (3) sont envoyées par la passerelle (1) par le premier réseau de communication (3) ou le deuxième réseau de communication (7) vers des moyens de réception (10) qui sont connectés au premier réseau de communication (3) et/ou au deuxième réseau de communication (7) et qui sont disponibles pour l'utilisateur.

8. Procédé selon l'une quelconque des revendications précédentes, **caractérisé en ce qu'**au moins une des étapes d'authentification et de transmission de données vers la passerelle (1) est réalise en utilisant un téléphone comme dispositif de communication.

9. Procédé selon la revendication 8, **caractérisé en ce qu'**au moins une des étapes d'authentification et de transmission de données est réalisée en utilisant le clavier du téléphone ou en utilisant la voix, et **en ce que** les procédures d'authentification et de transmission de données sont commandées par des moyens d'analyse de tonalité des touches (8) ou par des moyens de reconnaissance vocale (8) compris dans la passerelle (1).

10. Procédé selon l'une quelconque des revendications précédentes, **caractérisé en ce que** la passerelle (1) établit la liaison vers le fournisseur de services Internet pour connecter le réseau domestique (5) par l'intermédiaire de la passerelle (1) à l'Internet comme le premier réseau de communication (3), si une commande correspondante est comprise dans les données transférées depuis le dispositif de communication vers la passerelle (1).

11. Procédé selon l'une quelconque des revendications 7 à 10, **caractérisé en ce que** les informations nécessaires sont envoyées sous la forme d'un courrier électronique, d'un SMS ou d'une télécopie vers les moyens de réception (10), qui est une boîte de réception de courrier électronique, un dispositif SMS ou un télécopieur.

12. Procédé selon l'une quelconque des revendications précédentes, **caractérisé en ce que** le dispositif de communication est à la fois utilisé comme un dispositif de communication et comme moyens de réception (10).

13. Procédé selon l'une quelconque des revendications précédentes, **caractérisé en ce que** la passerelle (1) se déconnecte automatiquement du premier réseau de communication (3) en interrompant la connexion établie après une période de temps prédéterminé si la connexion établie n'est pas utilisée dans cette période de temps.

14. Passerelle (1) destinée à connecter un utilisateur à un réseau domestique par l'intermédiaire d'un premier réseau de communication (3) disponible pour l'utilisateur, la passerelle (1) comprenant des premiers moyens de connexion (2) qui connectent la passerelle (1) au premier réseau de communication (3), et des deuxièmes moyens de connexion (4) qui connectent la passerelle (1) au réseau domestique (5), **caractérisé en ce qu'**elle comprend en outre
des troisièmes moyens de connexion (6), qui connectent la passerelle (1) à un deuxième réseau de communication (7) disponible pour l'utilisateur,
des moyens de traitement (8) pour traiter des données reçues par les troisièmes moyens de connexion (6) par l'intermédiaire du deuxième réseau de communication (7), et
des moyens de commande de connexion (9) destinés à établir une connexion entre le réseau domestique (5) et le premier réseau de communication (3) par l'intermédiaire des premier et deuxième moyens de connexion (2, 4).

15. Passerelle (1) selon la revendication 14, **caractérisée en ce que** les moyens de traitement (8) comprennent des moyens d'analyse de tonalité de touche ou des moyens de reconnaissance vocale.

16. Passerelle (1) selon la revendication 14 ou 15, **caractérisée en ce que** les premiers et troisièmes moyens de connexion (2, 6) sont condensés ensemble en un seul moyen de connexion (11), qui est de préférence un modem ou un boîtier RNIS, qui connecte la passerelle (1) aux premier et deuxième réseaux de communication (3, 7).

17. Passerelle (1) selon l'une quelconque des revendications 14 à 16, **caractérisée en ce que** l'Internet est au moins une partie du premier réseau de communication (3).

18. Passerelle (1) selon l'une quelconque des revendications 14 à 17, **caractérisée en ce qu'**un réseau téléphonique est au moins une partie du deuxième réseau de communication (7).

19. Passerelle (1) selon l'une quelconque des revendications 14 à 18, **caractérisée en ce que** les premiers moyens de connexion (2) comprennent un modem ou un boîtier RNIS.

20. Passerelle (1) selon l'une quelconque des revendications 14 à 19, **caractérisée en ce que** les troisièmes moyens de connexion (6) comprennent un modem ou un boîtier RNIS.

21. Réseau de communication comprenant :
une passerelle selon l'une quelconque des revendications 14 à 20 ;
ledit premier réseau de communication ; et
ledit deuxième réseau de communication,
**caractérisé par** des moyens de réception (10), qui sont connectés à la passerelle (1) par l'intermédiaire du premier ou du deuxième réseau de communication (3, 7) et pouvant être atteint par l'utilisateur, pour recevoir des informations envoyées par la passerelle (1) sur le premier ou le deuxième réseau de communication (3, 7).

22. Réseau de communication selon la revendication 21, **caractérisé en ce que** les moyens de réception (10) sont une boîte de réception de courrier électronique, un dispositif SMS ou un télécopieur.
